# EUROPÄISCHE PATENTSCHRIFT

(11) **EP 0 494 725 B1**
(45) Veröffentlichungstag und Bekanntmachung des Hinweises auf die Patenterteilung: **01.03.1995**
(21) Anmeldenummer: 92250004.6
(22) Anmeldetag: 08.01.1992
(51) Int. Cl.: B60R 17/02, F16N 7/38

(54) **Zentralschmieraggregat**
Central lubricating unit
Unité centralisée de lubrification

(30) Priorität: 10.01.1991 DE 4100726
(43) Veröffentlichungstag der Anmeldung: 15.07.1992
(73) Patentinhaber: Willy Vogel AG, D-12277 Berlin (DE)
(72) Erfinder: Meuer, Johannes, Dipl.-Ing., W-1000 Berlin 22 (DE); Todtenhaupt, Dieter, W-1000 Berlin 31 (DE); Schönherr, Dieter, W-1000 Berlin 65 (DE)
(74) Vertreter: Böning, Manfred, Dr.-Ing.

(56) Entgegenhaltungen:
- DE-A- 2 458 711
- US-A- 1 187 637
- US-A- 2 848 067
- US-A- 4 143 995

## Beschreibung

Die Erfindung betrifft ein Zentralschmieraggregat für Fahrzeuge mit einem Schmierstoffbehälter, einer Schmierstoffpumpe, einem Antriebsmotor für die Schmierstoffpumpe und einem Druckentlastungsventil für anzuschließende, als Nachschmierverteiler ausgebildete Schmierstoffverteiler, wobei die Schmierstoffpumpe, ihr Antriebsmotor und ein das Druckentlastungsventil aufnehmender Ventilblock in einem geschlossenen Gehäuse untergebracht sind.

Aus der DE-AS 1 184 659, die die Merkmale des Oberbegriffs von Anspruch 1 zeigt, ist ein Zentralschmieraggregat der vorstehenden Art bekannt, bei dem die Schmierstoffpumpe als Tauchpumpe ausgebildet und zusammen mit dem Druckentlastungsventil und einem Druckbegrenzungsventil im Schmierstoffbehälter angeordnet ist, der hier folglich einen Teil des Gehäuses bildet. Oberhalb des Schmierstoffbehälters befindet sich in einem vom Schmierstoffbehälter abgeschotteten Gehäuseteil, durch eine Haube geschützt, der mit einem Steuergerät in Verbindung stehende Antriebsmotor für die Schmierstoffpumpe. Von der Schmierstoffpumpe führen Rohrleitungen zu an verschiedenen Stellen des Fahrzeuges gelegenen Schmierstoffverteilern. Das bekannte Aggregat arbeitet einwandfrei und eignet sich aufgrund seines großvolumigen Schmierstoffbehälters ohne Einschränkung für den Einbau in Fahrzeuge, bei denen eine große Zahl von Schmierstellen mit Fließfett zu versorgen ist. Bei kleineren regelmäßig nicht von Berufskraftfahrern betreuten Fahrzeugen lassen Handhabung und Wartung indes insofern Wünsche offen, als das Nachfüllen des Schmierstoffbehälters dessen Trennung vom Schmieraggregat erforderlich macht, was nicht nur umständlich ist, sondern auch die Gefahr von Verschmutzungen in sich birgt. Mit der Erfindung wird das Ziel verfolgt, ein in besonderem Maße für Kleinlaster geeignetes Zentralschmieraggregat zu schaffen, das bei kompaktem Aufbau leicht zu handhaben und zu warten ist. Diese Aufgabe wird bei einem Zentralschmieraggregat der in Betracht gezogenen Art dadurch gelöst, daß an der Oberseite des Gehäuses eine zur Halterung des Mundstückes einer Schmierstoffkartusche dienende Ausnehmung angeordnet ist, die über einen Durchlaß mit dem Ventilblock und über diesen mit dem Eingang der Schmierstoffpumpe verbunden ist, deren Ausgang mit einer Gruppe von mindestens vier Schmierstoffverteilern in Verbindung steht, die an der Außenseite eines Deckels des Gehäuses befestigt sind, der an seiner Innenseite den Ventilblock, die Schmierstoffpumpe und den Antriebsmotor trägt.

Das erfindungsgemäße Zentralschmieraggregat bietet neben dem Vorteil seiner Kompaktheit den Vorteil einer montage-und demontagefreundlichen, d.h. kostengünstigen Bauweise. Alle maßgeblichen Teile sind auf dem eine Montageplatte bildenden Deckel des Gehäuses angeordnet. Zu Wartungszwecken braucht mithin lediglich der Gehäusedeckel abgeschraubt zu werden und alle Bauteile sind leicht zugänglich. Die Verwendung von mit Fließfett gefüllten Schmierstoffkartuschen anstelle eines jeweils nachzufüllenden Schmierstoffbehälters erleichtert die Handhabung und läßt zudem die Notwendigkeit von Reinigungsarbeiten des Schmierstoffbehälters entfallen.

Weitere Einzelheiten und Merkmale der Erfindung ergeben sich aus den Unteransprüchen und der nachstehenden Beschreibung eines in der beigefügten Zeichnung dargestellten bevorzugten Ausführungsbeispieles. Es zeigen:
- Fig. 1: teilweise im Schnitt die Seitenansicht eines Zentralschmieraggregates und
- Fig. 2: ebenfalls teilweise im Schnitt eine Draufsicht auf die Schmierstoffpumpe und die sie mit ihrem Antriebsmotor verbindenden Teile des Zentralschmieraggregates gemäß Fig. 1.

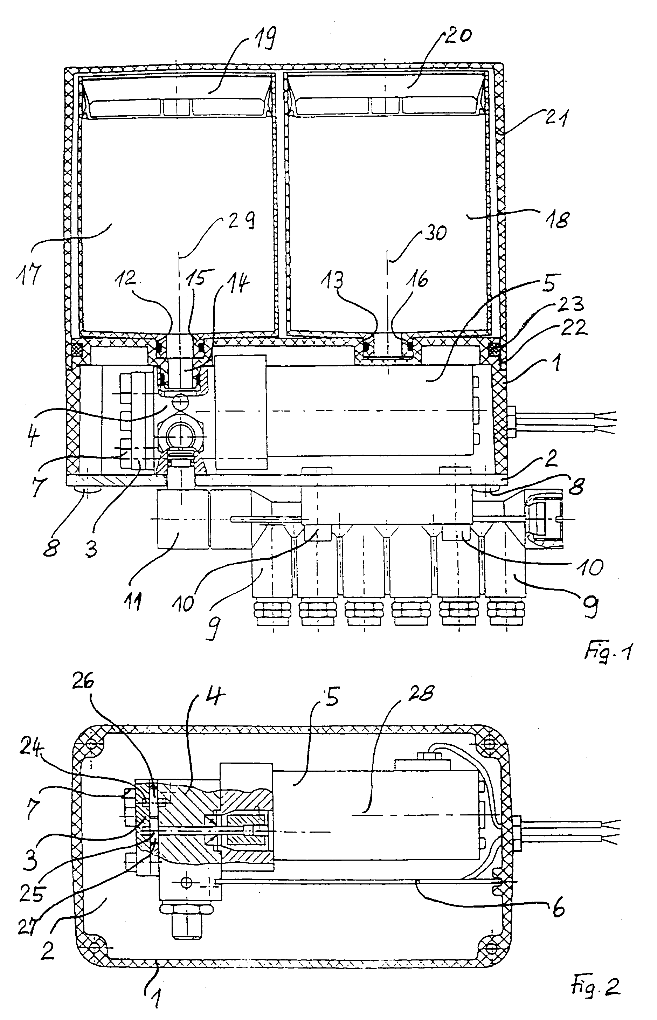

In Figur 1 ist 1 ein durch einen Deckel 2 verschließbares Gehäuse, in dem geschützt eine als Zahnradpumpe ausgebildete Schmierstoffpumpe 3, ein Ventilblock 4, der ein Druckentlastungsventil aufnimmt, ein Antriebsmotor 5 für die Schmierstoffpumpe 3 und eine Steuerplatine 6 untergebracht sind. Die Schmierstoffpumpe 3 und der Antriebsmotor 5 sind durch Schrauben 7 mit dem Ventilblock 4 verbunden, der seinerseits an die Innenseite des Deckels angeschraubt ist. Zum Verbinden des Deckels 2 mit dem Gehäuse 1 dienen Schrauben 8. An der Außenseite des Deckels 2 sind sechs zu einer Baugruppe zusammengefaßte, als Nachschmierverteiler ausgebildete Schmierstoffverteiler 9 angeordnet, die wiederum durch Schrauben 10 gehalten werden. Die Schmierstoffverteiler 9 stehen über ein Zwischenstück 11 mit dem Ventilblock 4 in Verbindung. Der Deckel 2 bildet somit eine leicht vom Gehäuse 1 trennbare Montageplatte für die funktionswichtigen Teile des Aggregates.

An der Oberseite des Gehäuses 1 weist dieses zwei Ausnehmungen 12 und 13 auf, von denen eine über einen Justierstutzen bildenden Durchlaß 14 mit dem Ventilblock 4 verbunden ist. In die Ausnehmungen 12 und 13 ragen die Mundstücke 15,16 zweier mit Fließfett gefüllter Schmierstoffkartuschen 17,18, die beide mit jeweils einem Folgekolben 19 bzw. 20 ausgestattet sind. Während das Mundstück 15 der Schmierstoffkartusche 17 offen ist, ist das Mundstück 16 der Schmierstoffkartusche 18 durch eine abziehbare Folie versiegelt. Beide Kartuschen 17,18 schützt eine Haube 21 gegen Verschmutzung, wobei zur Halterung der Haube 21 ein umlaufender Bund 22 am Gehäuse 1 und ein federnder Dichtungsring 23 dienen.

Dadurch, daß die Achsen 24,25 der Zahnräder 26,27 der Schmierstoffpumpe und die Achse 28 des Antriebsmotors 5 senkrecht zu den Achsen 29,30 der Schmierstoffkartuschen 17,18 verlaufen, d.h. horizontal angeordnet sind, beanspruchen Gehäuse 1 und Haube 21 wenig Raum, so daß die Unterbringung des gesamten Aggregates an einem Fahrzeug keine Probleme bereitet.

## Patentansprüche

1. Zentralschmieraggregat für Fahrzeuge mit einem Schmierstoffbehälter (17), einer Schmierstoffpumpe (3), einem Antriebsmotor (5) für die Schmierstoffpumpe (3) und einem Druckentlastungsventil für anzuschließende, als Nachschmierverteiler ausgebildete Schmierstoffverteiler (9), wobei die Schmierstoffpumpe (3), ihr Antriebsmotor (5) und ein das Druckentlastungsventil aufnehmender Ventilblock (4) in einem geschlossenen Gehäuse (1) untergebracht sind, dadurch **gekennzeichnet**, daß an der Oberseite des Gehäuses (1) eine zur Halterung des Mundstückes (15) einer Schmierstoffkartusche (17) dienende Ausnehmung (12) angeordnet ist, die über einen Durchlaß (14) mit dem Ventilblock (4) und über diesen mit dem Eingang der Schmierstoffpumpe (3) verbunden ist, deren Ausgang mit einer Gruppe von mindestens vier Schmierstoffverteilern (9) in Verbindung steht, die an der Außenseite eines Deckels (2) des Gehäuses (1) befestigt sind, der an seiner Innenseite den Ventilblock (4), die Schmierstoffpumpe (3) und den Antriebsmotor (5) trägt.

2. Zentralschmieraggregat nach Anspruch 1, dadurch gekennzeichnet, daß der die Ausnehmung (12) mit dem Ventilblock (4) verbindende Durchlaß (14) einen Justierstutzen für die am Deckel (2) befestigten und mit diesem eine Montageeinheit bildenden Teile formt.

3. Zentralschmieraggregat nach Anspruch 1 oder 2, dadurch gekennzeichnet, daß im Gehäuse (1) eine Steuerplatine (6) angeordnet ist.

4. Zentralschmieraggregat nach Anspruch 2 und 3, dadurch gekennzeichnet, daß die Steuerplatine (6) einen Bestandteil der Montageeinheit bildet.

5. Zentralschmieraggregat nach einem der Ansprüche 1 bis 4, dadurch gekennzeichnet, daß die Schmierstoffpumpe (3) und ihr Antriebsmotor (5) am Ventilblock (4) befestigt sind und nur dieser am Deckel (2) angeschraubt ist.

6. Zentralschmieraggregat nach Anspruch 5, dadurch gekennzeichnet, daß der Ventilblock (4) über ein Zwischenstück (11) mit den Schmierstoffverteilern (9) in Verbindung steht.

7. Zentralschmieraggregat nach einem der Ansprüche 1 bis 6, dadurch gekennzeichnet, daß die Schmierstoffpumpe (3) als Zahnradpumpe ausgebildet ist.

8. Zentralschmieraggregat nach Anspruch 6, dadurch gekennzeichnet, daß die Achsen (24,25) der Zahnräder (26,27) der Schmierstoffpumpe (3) und die Achse (28) des Antriebsmotors (5) senkrecht zur Längsachse (29) der Schmierstoffkartusche (17) verlaufen.

9. Zentralschmieraggregat nach einem der Ansprüche 1 bis 8, dadurch gekennzeichnet, daß die oberhalb des Gehäuses (1) angeordnete Schmierstoffkartusche (17) einen Folgekolben (19) aufweist.

10. Zentralschmieraggregat nach einem der Ansprüche 1 bis 9, dadurch gekennzeichnet, daß an der Oberseite des Gehäuses (1) eine zusätzliche Ausnehmung (13) zur Aufnahme des Mundstückes (16) einer Reserve-Schmierstoffkartusche (18) angeordnet ist.

11. Zentralschmieraggregat nach einem der Ansprüche 1 bis 10, dadurch gekennzeichnet, daß das Gehäuse (1) mit einem Bund (22) für eine die Schmierstoffkartuschen (17,18) abdeckende Haube (21) versehen ist.

## Claims

1. A centralized lubrication system for vehicles, with a lubricant reservoir (17), a lubricant pump (3), a drive motor (5) for the lubricant pump (3) and a pressure relief valve for lubricant distributors (9) to be connected in the form of lubricant re-distributors, wherein the lubricant pump (3), its drive motor (5) and a valve block (4) accommodating the pressure relief valve are contained in a closed housing (1), characterised in that a recess (12) serving to hold the orifice (15) of a lubricant cartridge (17) is arranged on the top side of the housing (1), the said recess (12) being connected via a passage (14) with the valve block (4) and via this with the inlet of the lubricant pump (3), the outlet of which is connected to a group of at least four lubricant distributors (9) which are secured to the outer side of a cover (2) of the housing (1), which has the valve block (4), the lubricant pump (3) and the drive motor (5) on its inner side.

2. A centralized lubrication system according to claim 1, characterised in that the passage (14) connecting the recess (12) with the valve block (4) forms an adjusting connecting piece for the parts connected to the cover (2) and together constituting an assembly unit.

3. A centralized lubrication system according to claim 1 or claim 2, characterised in that a control board (6) is arranged in the housing (1).

4. A centralized lubrication system according to claims 2 and 3, characterised in that the control board (6) forms a constituent part of the assembly unit.

5. A centralized lubrication system according to any one of claims 1 to 4, characterised in that the lubricant pump (3) and its drive motor (5) are secured to the valve block (4) and that only the said valve block (4) is screwed to the cover (2).

6. A centralized lubrication system according to claim 5, characterised in that the valve block (4) is connected to the lubricant distributors (9) via an adapter (11).

7. A centralized lubrication system according to any one of claims 1 to 6, characterised in that the lubricant pump (3) is in the form of a gear pump.

8. A centralized lubrication system according to claim 6, characterised in that the axes (24, 25) of the gear wheels (26, 27) of the lubricant pump (3) and the axis (28) of the drive motor (5) extend perpendicularly to the longitudinal axis (29) of the lubricant cartridge (17).

9. A centralized lubrication system according to any one of claims 1 to 8, characterised in that the lubricant cartridge (17) arranged above the housing (1) is provided with a sequential piston (19).

10. A centralized lubrication system according to any one of claims 1 to 9, characterised in that an additional recess (13) is arranged on the upper side of the housing (1) to accommodate the orifice (16) of a reserve lubricant cartridge (18).

11. A centralized lubrication system according to any one of claims 1 to 10, characterised in that the housing (1) is provided with a collar (22) for a hood (21) covering the lubricant cartridges (17, 18).

## Revendications

1. Unité centralisée de lubrification pour véhicules automobiles comportant un réservoir de lubrifiant (17), une pompe à lubrifiant (3), un moteur d'entraînement (5) pour la pompe à lubrifiant (3) et une soupape de détente pour des distributeurs de lubrifiant (9) qui s'y raccordent et qui se présentent sous la forme de distributeurs de regraissage, la pompe à lubrifiant (3), son moteur d'entraînement (5) et un bloc soupape (4) recevant la soupape de détente étant logés dans un boîtier fermé (1), caractérisée en ce qu'on prévoit sur la partie supérieure du boîtier (1) un évidement (12) servant à la fixation de l'embout (15) d'une cartouche de lubrifiant (17), qui est raccordé via un passage (14) au bloc soupape (4) et, via celui-ci, à l'entrée de la pompe de lubrifiant (3) dont la sortie communique avec un groupe d'au moins quatre distributeurs de lubrifiant (9), qui sont fixés sur la face externe d'un couvercle (2) du boîtier (1) qui porte, sur sa face interne, le bloc soupape (4), la pompe à lubrifiant (3) et le moteur d'entraînement (5).

2. Unité centralisée de lubrification selon la revendication 1, caractérisée en ce que le passage (14) raccordant l'évidement (12) au bloc soupape (4) forme une tubulure de réglage pour les parties fixées au couvercle (2) et formant avec celui-ci une unité de montage.

3. Unité centralisée de lubrification selon la revendication 1 ou 2, caractérisée en ce qu'une platine de commande (6) est agencée dans le boîtier (1).

4. Unité centralisée de lubrification selon les revendications 2 et 3, caractérisée en ce que la platine de commande (6) forme un composant de l'unité de montage.

5. Unité centralisée de lubrification selon l'une quelconque des revendications 1 à 4, caractérisée en ce que la pompe de lubrifiant (3) et son moteur d'entraînement (5) sont fixés sur le bloc soupape (4) et seul celui-ci est vissé sur le couvercle (2).

6. Unité centralisée de lubrification selon la revendication 5, caractérisée en ce que le bloc soupape (4) est en communication avec les distributeurs de lubrifiant (9) via une pièce intermédiaire (11).

7. Unité centralisée de lubrification selon l'une quelconque des revendications 1 à 6, caractérisée en ce que la pompe à lubrifiant (3) se présente sous la forme d'une pompe à engrenages.

8. Unité centralisée de lubrification selon la revendication 6, caractérisée en ce que les axes (24, 25) des roues dentées (26, 27) de la pompe de lubrifiant (3) et l'axe (28) du moteur d'entraînement (5) s'étendent perpendiculairement à l'axe longitudinal (29) de la cartouche de lubrifiant (17).

9. Unité centralisée de lubrification selon l'une quelconque des revendications 1 à 8, caractérisée en ce que la cartouche de lubrifiant (17) agencée au dessus du boîtier (1) présente un piston suiveur (19).

10. Unité centralisée de lubrification selon l'une quelconque des revendications 1 à 9, caractérisée en ce qu'on prévoit, sur la partie supérieure du boîtier (1), un évidement supplémentaire (13) pour recevoir l'embout (16) d'une cartouche de lubrification de réserve (18).

11. Unité centralisée de lubrification selon l'une quelconque des revendications 1 à 10, caractérisée en ce que le boîtier (1) est pourvu d'un collet (22) pour un capot (21) recouvrant les cartouches de lubrifiant (17, 18).
